# EUROPÄISCHE PATENTSCHRIFT

(11) **EP 1 065 548 B1**
(45) Veröffentlichungstag und Bekanntmachung des Hinweises auf die Patenterteilung: **30.11.2005**
(21) Anmeldenummer: 00112640.8
(22) Anmeldetag: 15.06.2000
(51) Int. Cl.: G02B 7/02

(54) **Baugruppe aus einem optischen Element und einer Fassung**
Assembly of an optical element and a mounting
Assemblage d'un élément optique et d'une monture

(30) Priorität: 02.07.1999 DE 19930643
(43) Veröffentlichungstag der Anmeldung: 03.01.2001
(73) Patentinhaber: Carl Zeiss SMT AG, 73446 Oberkochen (DE)
(72) Erfinder: Trunz, Michael, 73479 Pfahlheim (DE); Gellrich, Bernhard, 73434 Aalen (DE); Gischa, Roland, 89081 Ulm (DE); Holderer, Hubert, 89551 Koenigsbrunn (DE); Rösch, Cornelia, 73434 Aalen (DE)
(74) Vertreter: Lorenz, Werner

(56) Entgegenhaltungen:
- EP-A- 0 585 687
- DE-A- 19 735 831
- US-A- 5 570 238

## Beschreibung

Die Erfindung betrifft eine Baugruppe aus einem optischen Element und einer Fassung.

Aus der Praxis sind bereits Baugruppen mit Linsen als optische Elemente bekannt, die über Innenringe mit einem Befestigungsflansch verbunden sind. Durch den Innenring lässt sich zwar eine Deformationsentkopplung erreichen, nachteilig dabei ist jedoch, dass keine ausreichende Steifigkeit gegeben ist und teilweise bekannte Konstruktionen auch Bauraumprobleme besitzen.

Aus der DE 197 35 831 A1 ist eine galvanoplastische OptikFassung bekannt, bei der Auflagefüßchen als Auflageflächen für ein optisches Element auf galvanoplastische Weise hergestellt werden. Dabei wird ein auf diese Weise erzeugter Innenring nach dem Ablösen von einem Formkern zwischen Stegen durchtrennt, so dass die Auflagefüßchen von einem Außenring aus frei ohne Verbindung miteinander auskragen. Damit wird der Innenring in eine Vielzahl von einzelnen Segmente bzw. Auflagefüßchen aufgetrennt. Der auf diese Weise geteilte Innenring wird dann mit jedem Segment einzeln mit einer Linse verbunden und kann so spannungsfrei dessen thermische Ausdehnung übernehmen.

In der EP 0 585 687 A1 ist eine Lagerung für eine Linse mit einem stabilen trichterförmigen Lagerungsglied beschrieben, welches über Spiralfedern gelagert ist, um eine vorgewählte Position der Linse in dem optischen System aufrecht zu erhalten.

Der vorliegenden Erfindung liegt die Aufgabe zugrunde, eine Baugruppe der eingangs erwähnten Art zu schaffen, die bei relativ geringem radialem Bauraum mit einer gezielten Fassungsauslegung eine Deformationsentkoppelung des optischen Elementes ermöglicht, wobei gleichzeitig eine gute Steifigkeit gegeben sein soll.

Erfindungsgemäß wird diese Aufgabe durch eine Baugruppe entsprechend den in Anspruch 1 genannten Merkmalen gelöst.

Erfindungsgemäß wird nun für das optische Element, z.B. einer Linse, eine dreiteilige Fassung verwendet, welche einen Befestigungsflansch, ein Zwischenglied in Trichterform und einen Innenring aufweist. Jedes der drei Fassungsteile übernimmt dabei eine spezifische Aufgabe und kann dementsprechend jeweils optimal an diese Aufgabe angepasst werden. Über den Befestigungsflansch erfolgt die Verbindung des jeweiligen optischen Elementes mit der Baugruppe bzw. zu einer Baugruppe. Das dünnwandige Zwischenglied in Trichterform ist aufgrund seiner Geometrie relativ steif und wird deshalb nicht ohne weiteres deformiert, während sich der Befestigungsflansch, der im allgemeinen als Flanschring ausgebildet sein wird, den eingeleiteten Deformationen anpassen kann. Fertigungstoleranzen am Flanschbereich lassen sich durch eine entsprechend gestaltete Verbindung zwischen dem Zwischenglied und dem Befestigungsflansch entkoppeln. Dies kann durch freigeschnittene, elastische Elemente am Befestigungsflansch unterstützt werden. Außerdem sind Schwächungen des Querschnitts im Bereich des Flanschringes, des Zwischengliedes und/oder der Verbindungsstelle zwischen beiden möglich.

Der Innenring ist mit wenigstens drei über den Umfang verteilt angeordneten elastischen Auflageflächen in Form von Auflagefüßchen versehen, auf denen das optische Element gelagert ist.

Im allgemeinen wird man das Zwischenglied aus einem dünnwandigen Blech in Umformtechnik herstellen, womit es eine sowohl in axialer als auch in radialer Richtung steife Struktur besitzt, welche eine Lagerung der optischen Elemente unter der geforderten Eigenfrequenz sicherstellt. Eine Weiterleitung von Deformationen auf das optische Element wird zusätzlich durch den Innenring verhindert, der zur Aufnahme des optischen Elementes und zur Entkoppelung von Deformationen dient.

Andere Ausführungen sind z.B. monolithische Herstellung (gesamte Fassung aus einem Stück) oder die galvanische Abscheidung (Ni) des dünnwandigen Zwischengliedes auf einem Kern mit gleichzeitigem Aufwachsen an Befestigungsflansch und am Innenring. Je nach Ausgestaltung des Formkerns kann das galvanoplastisch abgeschiedene Zwischenglied auch den Innenring und gegebenenfalls auch die Auflageflächen in Form von Auflagefüßchen beinhalten, indem er bzw. sie in das Zwischenglied integriert sind.

Durch das Einbringen von elastischen Elementen in den Bereich des Zwischengliedes, welche sich bei Einleitung einer Deformation selbst verformen können, kann die Weiterleitung von Deformationen auf den Innenring noch stärker verhindert werden. Eine mögliche Lösung hierfür besteht darin, dass das Zwischenglied mit Einschnitten versehen ist. Die Einschnitte können dabei sowohl in radialer als auch in axialer Richtung verlaufen.

In einer sehr vorteilhaften Weiterbildung der Erfindung kann über den Befestigungsflansch eine platzsparende Verbindung mit benachbarten Fassungen zur Bildung eines Objektives geschaffen werden. Hierzu werden mehrere aus einem Befestigungsflansch, einem Zwischenglied und einem Innenring bestehende Fassungen in einer Anschraubebene der Befestigungsflansche miteinander verbunden.

Bei bekannten Ausführungen von Fassungen wird aufgrund der Verbindungsverfahren mit Schrauben relativ viel Bauraum benötigt. Durch die erfindungsgemäße Verbindungsart in nur einer Anschraubebene lässt sich neben der Deformationsarmut gleichzeitig auch eine bauraumsparende Verbindung herstellen.

Dabei soll in einer vorteilhaften Ausgestaltung eine Verbindungsart vorgesehen sein, durch die jede einzelne Fassung nachjustierbar ist. Dies bedeutet, alle Schrauben für die entsprechenden Fassungen sollten von außen unabhängig voneinander zugänglich sein.

In einer sehr vorteilhaften Ausgestaltung der Erfindung wird dies dadurch erreicht, dass die auf eine Fassung mit eingeschraubten Schrauben folgende Fassung (oder Fassungen) mit Durchgangsbohrungen im Befestigungsflansch versehen sind, die mit den eingeschraubten Schrauben fluchten und die Durchmesser aufweisen, die mindestens den größten Durchmessern der Schrauben entsprechen.

Weitere vorteilhafte Ausgestaltungen und Weiterbildungen ergeben sich aus den übrigen Unteransprüchen und aus dem nachfolgend anhand der Zeichnung prinzipmäßig beschriebenen Ausführungsbeispiel.

Es zeigt:
- Figur 1: einen Teilschnitt durch die erfindungsgemäße Baugruppe mit einer Fassung, die einen Befestigungsflansch, ein Zwischenglied in Trichterform und einen Innenring mit einem optischen Element aufweist;
- Figur 2: eine Baugruppe entsprechend dem Ausführungsbeispiel nach der Figur 1, wobei das Zwischenglied in Trichterform mit einer Abstufung versehen ist;
- Figur 3: eine Draufsicht auf die Baugruppe nach Figur 1;
- Figur 4: einen Teilschnitt im Bereich einer Schraubverbindung zwischen einem ersten und einem zweiten Befestigungsflansch;
- Figur 5: einen Teilschnitt im Bereich einer Schraubverbindung zwischen einem zweiten und einem dritten Befestigungsflansch;
- Figur 6: einen Befestigungsflansch und einen Innenring mit galvanisch abgeschiedenem Zwischenglied auf einem Formkern; und
- Figur 7: einen Befestigungsflansch mit einem galvanisch abgeschiedenen Zwischenglied und einem in das Zwischenglied integrierten bzw. mit diesem monolithischen Innenring auf einem Formkern mit Abdeckungen (bei der Herstellung) zum Separieren der damit ebenfalls monolithischen Auflageflächen in Form von Auflagefüßchen.

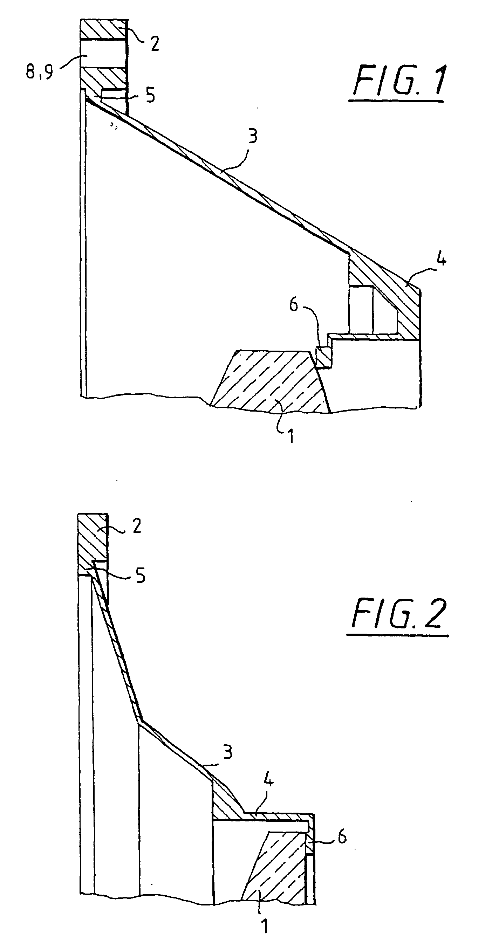

Gemäß Fig. 1 weist eine Fassung für ein optisches Element 1 einen Befestigungsflansch 2 in Form eines Flanschringes, ein Zwischenglied 3 in Trichterform und einen Innenring 4 auf.

Das Zwischenglied 3, welches nachfolgend als Konus bzw. Trichter bezeichnet wird, ist auf der Seite mit dem größeren Durchmesser über einen Absatzring 5 mit dem Befestigungsflansch 2 verbunden. Auf der Seite mit dem geringeren Durchmesser ist das Zwischenglied 3 mit dem Innenring 4 verbunden. Die Einzelelemente der Fassung können durch Hochtemperaturlötung, Laser- oder Mikroplasmaschweißung gefügt werden. Der Absatzring 5, an welchem das Zwischenglied 3 befestigt ist, ist in seiner Dicke deutlich geringer als die Dicke des Befestigungsflansches 2. Die Form des Absatzringes ergibt sich durch das Fügeverfahren mit dem Zwischenglied 3, so dass auch gezielt ein kleinerer oder auch ein größerer Querschnitt eingesetzt werden kann.

Wie aus der Fig. 1 ersichtlich ist, ist das Zwischenglied 3 im Vergleich zu dem Befestigungsflansch 2 und dem Innenring 4 wesentlich dünnwandiger ausgebildet. Im allgemeinen wird man das Zwischenglied 3 als Trichter aus einem durch Umformtechnik hergestellten Blech, z.B. einem gezogenen, gedrückten oder gerollten Blechteil, herstellen.

Die innere Umfangswand des Innenringes 4 ist mit mehreren über den Umfang verteilten Auflagefüßchen 6 versehen, auf denen das optische Element 1 aufliegt. Im Allgemeinen werden drei gleichmäßig über den Umfang verteilt angeordnete Auflagefüßchen 6 für eine exakte und deformationsfreie Lagerung des optischen Elementes 1 ausreichend sein.

Der Trichterwinkel gegenüber der optischen Achse kann zwischen 30 und 40° betragen. Vorzugsweise wird man einen Winkel von 30° vorsehen, da auf diese Weise eine Gleichschenkligkeit mit einer entsprechend hohen Festigkeit gegeben ist. Selbstverständlich sind gegebenenfalls auch noch andere Winkelwerte möglich.

Aus der Fig. 2, welche grundsätzlich den gleichen Aufbau zeigt wie das Ausführungsbeispiel nach der Fig. 1, ist ersichtlich, dass der Trichter eine Abknickung bzw. eine Winkelstufe aufweist. Der flachere Winkel befindet sich auf der dem Innenring 4 zugewandten Seite, während der gegenüber der optischen Achse steilere Winkel auf der dem Befestigungsflansch 2 zugeordneten Seite angeordnet ist. Auf diese Weise lässt sich ebenfalls eine entsprechende Deformationsentkopplung bei hoher Steifigkeit bei einer kürzeren Baulänge erreichen.

Für eine weitere Erhöhung der Deformationsentkoppelung kann vorgesehen sein, dass der Trichter mit geeigneten Einschnitten in radialer, axialer Richtung oder mit Kombinationen daraus (auch schräg) versehen ist (nicht dargestellt).

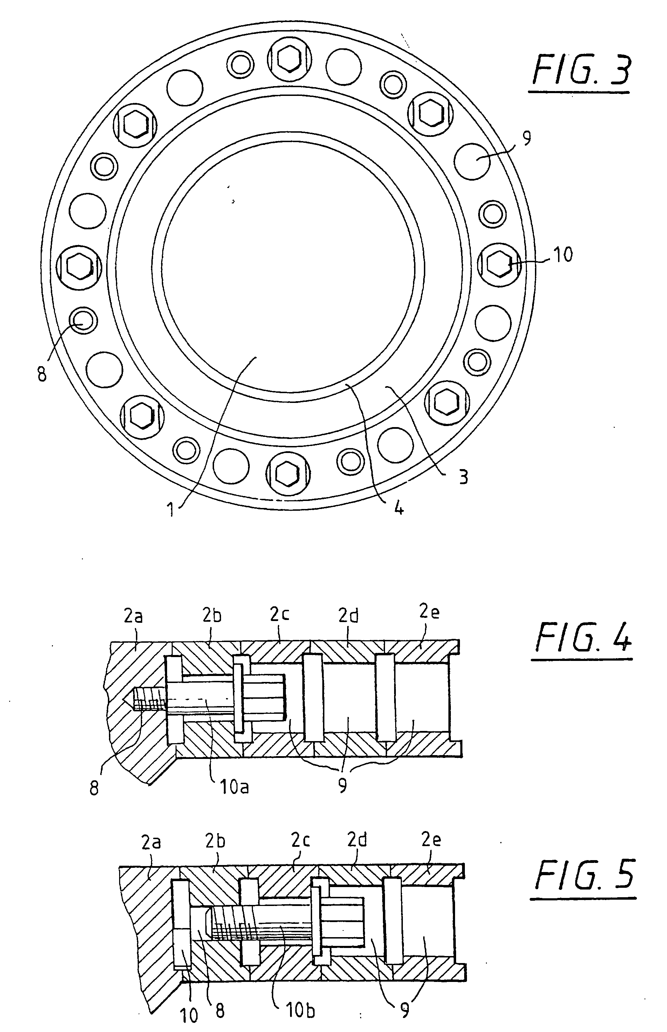

Aus den Figuren 3 bis 5 ist ersichtlich, wie unter einer deutlichen Bauraumreduzierung mehrere Fassungen in einer Anschraubebene miteinander verbunden werden. Hierzu ist jeder Befestigungsflansch 2 mit einer Vielzahl von Bohrungen versehen, nämlich Gewindebohrungen 8 und Durchgangsbohrungen 9. Über die Gewindebohrungen 8 werden jeweils benachbart zueinander liegende Befestigungsflansche 2 miteinander verbunden.

Aus der Fig. 4 ist eine Verbindung zwischen einem ersten Befestigungsflansch 2a und einem zweiten Befestigungsflansch 2b erkennbar, wobei in den Befestigungsflansch 2b durch ein Schraubenloch eine Schraube 10a durchgesteckt und in die Gewindebohrung 8 des Befestigungsflansches 2a eingeschraubt wird. Der dritte Befestigungsflansch 2c und ebenfalls ihm nachfolgende Befestigungsflansche 2d und 2e sind mit Durchgangsbohrungen 9 versehen, die mit der Gewindebohrung 8 des ersten Flansches 2a und damit auch mit der Schraube 10a fluchten. Wie aus der Fig. 4 weiterhin ersichtlich ist, sind die Durchmesser der Durchgangsbohrungen 9 so groß gewählt, dass der Kopf der Schraube 10a oder gegebenenfalls einer Unterlegscheibe, der bzw. die den größten Durchmesser besitzt, durch die Durchgangsbohrungen 9 durchgeschoben werden kann. Je nach Größe einer Baugruppe wird man jeweils zwischen vier und sechzehn Schrauben 10 mit dazugehörigen Schraubenlöcher und Bohrungen 8 bzw. 9 pro Baugruppe versehen.

Fig. 5 zeigt die Befestigung des dritten Befestigungsflansches 2c mit dem zweiten Befestigungsflansch 2b über eine Schraube 10b. Aus dieser Figur ist der Schaft der Schraube 10a noch erkennbar, der sich auf dem gleichen Durchmesser befindet wie alle Bohrungen 8 und 9 und Schrauben 10, allerdings umfangsmäßig versetzt. Auch ist aus dieser Figur ersichtlich, dass die nachfolgenden Befestigungsflansche 2 (z.B. Flansch 2e) Durchgangsbohrungen 9 aufweisen, über die jeweils die Schrauben 10 zur jeweiligen Befestigung von benachbart zueinander liegenden Fassungen durchgeschoben werden können.

Durch diese Ausgestaltung wird nicht nur eine Bauraumreduzierung erreicht, sondern gleichzeitig können auch die Fassungen einzeln nachjustiert werden, da alle Schrauben der Fassungen von außen her über die Durchgangsbohrungen 9 zugänglich sind. Gleichzeitig lassen sich auf diese Weise die Fassungen so hintereinander schachteln, dass nur ein minimaler Abstand, insbesondere von Trichter zu Trichter, gegeben ist. Dies gewährleistet insbesondere, dass nur ein relativ kleiner Bauraum zwischen den optischen Elementen und der Außenkontur des Systems benötigt wird.

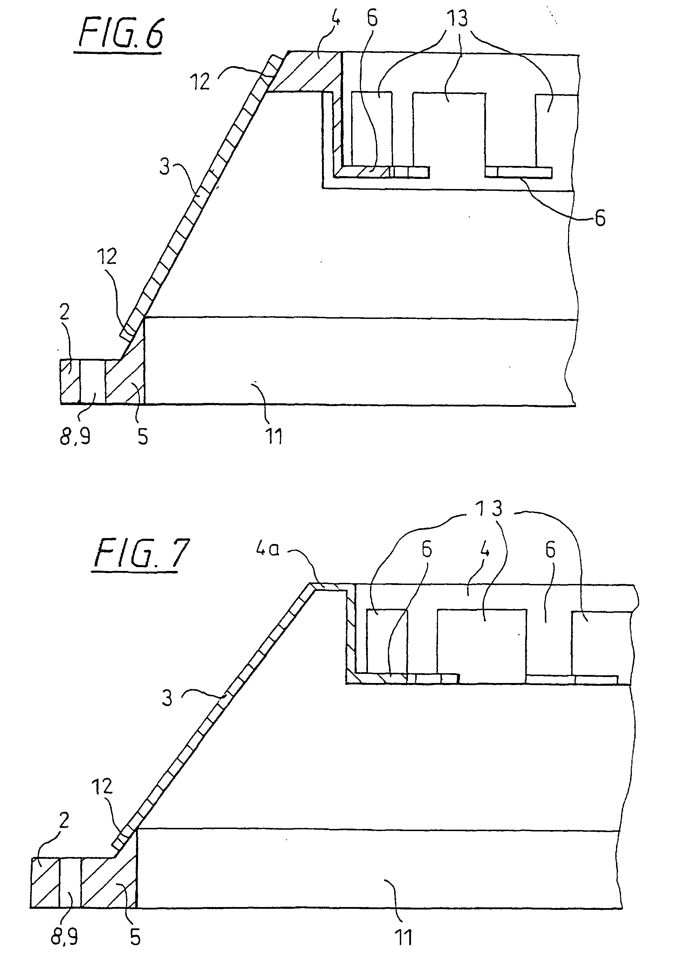

Fig. 6 zeigt den grundsätzlich gleichen Aufbau wie Fig. 1, jedoch ist hier ein Kern 11 ersichtlich, auf welchem eine galvanoplastisch aufgebrachte Schicht, vorzugsweise aus Ni, den Trichter als Zwischenglied 3 darstellt. Dieser Trichter wird galvanoplastisch auf den Kern 11, den Befestigungsflansch 2 und den Innenring 4, wie dargestellt, aufgebracht. Somit werden die drei Teile durch den Trichter bei dessen Herstellung gleichzeitig an Fügeflächen 12 verbunden. Als Material für den Trichter wird vorzugsweise Ni mit einer Schichtdicke von 0,2 bis 1,0 mm verwendet. Je nach Ausführung kann der Kern 11 nach dem galvanoplastischen Prozess abgetrennt und wiederverwendet werden oder er muss aufgelöst oder ausgeschmolzen werden. Falls der Kern 11 aufgelöst werden muss, ist es günstig, diesen so dünn wie möglich auszuführen, damit die Zeit zum Auflösen möglichst kurz wird. Der Kern 11 kann aus leitfähigem Material bestehen, ebenso jedoch auch aus nicht leitfähigem Material. In letzterem Fall wird man den Kern 11 mit einer leitfähigen Schicht belegen.

Figur 7 zeigt einen ähnlichen Aufbau wie Fig. 6, jedoch wird hier nur ein Befestigungsflansch 2 als vorgefertigtes Bauteil mit einem - im Querschnitt - keilförmigen Absatzring 5 (ebenso wie in Fig. 6) zur besseren Verbindung zwischen dem Befestigungsflansch 2 und dem Trichter beim Herstellprozess verwendet. Statt eines separat vorgefertigten Innenringes 4 mit Auflagefüßchen 6, werden hier ein dünner Innenring 4 mit den Auflagefüßchen 6 direkt auf dem Kern 11 galvanoplastisch abgeformt. Durch Abdecken von Zwischenräumen 13 zwischen den einzelnen Auflagefüßchen 6 kann nur dort Material aufgebaut werden, wo ein Auflagefüßchen 6 entstehen soll. Auch hier wird während der galvanoplastischen Herstellung des Trichters mit dem Innenring 4 und den Auflagefüßchen 6 gleichzeitig die Verbindung von Befestigungsflansch 2 und Trichter hergestellt.

Wie weiter aus der Fig. 7 ersichtlich ist, ist der Innenring 4 in diesem Fall von gleicher Dicke wie der monolithisch mit ihm hergestellte Trichter im Vergleich zu dem Innenring nach der Fig. 4. Trotz der relativ dünnen Wanddicke wird durch den Flachringbereich 4a eine ausreichende Stabilität erreicht.

Anstelle eines Verlaufes der Auflagefüßchen 6 mit den Längsachsen nach innen und parallel zur optischen Achse und den daran sich anschließenden rechtwinklig zur optischen Achse gerichteten Auflageflächen können sich die Längsachsen der Auflagefüßchen 6 auch nach außen und parallel zur optischen Achse erstrecken, wobei dann allerdings ein größerer Bauraum in axialer Richtung bzw. in z-Richtung erforderlich wird.

## Patentansprüche

1. Baugruppe aus einem optischen Element und einer Fassung, welche einen Befestigungsflansch (2), ein geschlossenes, einteiliges Zwischenglied (3) in wenigstens annähernd Trichterform und einen geschlossenen Innenring (4) aufweist, wobei das optische Element (1) in dem Innenring (4) gelagert ist, welcher über das Zwischenglied (3) mit dem Befestigungsflansch (2) verbunden ist, wobei das Zwischenglied (3) auf der Seite mit dem geringeren Durchmesser mit dem Innenring (4) und auf der Seite mit dem größeren Durchmesser mit dem Befestigungsflansch (2) verbunden ist, wobei der Innenring (4) mit wenigstens drei über den Umfang verteilt angeordneten Auflageflächen in Form von Auflagefüßchen (6) versehen ist, auf denen das optische Element (1) gelagert ist, und wobei das Zwischenglied (3) im Vergleich zu dem Befestigungsflansch (2) und dem Innenring (4) dünnwandig ausgebildet ist.

2. Baugruppe nach Anspruch 1, **dadurch gekennzeichnet, dass** der Trichterwinkel des Zwischengliedes (3) 30 bis 40° gegenüber der optischen Achse beträgt.

3. Baugruppe nach einem der Ansprüche 1 oder 2, **dadurch gekennzeichnet, dass** das Zwischenglied (3) eine Trichterform mit unterschiedlichen Steigungswinkeln aufweist.

4. Baugruppe nach Anspruch 3, **dadurch gekennzeichnet, dass** der Trichterwinkel auf der dem Befestigungsflansch (2) zugewandten Seite gegenüber der optischen Achse steiler ist als auf der dem Innenring (4) zugewandten Seite.

5. Baugruppe nach einem der Ansprüche 1 bis 4, **dadurch gekennzeichnet, dass** das Zwischenglied (3) mit Einschnitten versehen ist.

6. Baugruppe nach einem der Ansprüche 1 bis 5, **dadurch gekennzeichnet, dass** das Zwischenglied (3) über einen Absatzring (5) mit dem Befestigungsflansch (2) verbunden ist.

7. Baugruppe nach einem der Ansprüche 1 bis 6, **dadurch gekennzeichnet, dass** das Zwischenglied (3) galvanoplastisch durch Abformung auf einem Kern (11) hergestellt ist.

8. Baugruppe nach Anspruch 7, **dadurch gekennzeichnet, dass** das Zwischenglied (3) bei der galvanoplastischen Herstellung mit dem Befestigungsflansch (2) und/oder mit dem Innenring (4) verbindbar ist.

9. Baugruppe nach Anspruch 6, **dadurch gekennzeichnet, dass** der Absatzring (5) keilförmig ausgebildet ist.

10. Baugruppe nach einem der Ansprüche 1 bis 6, **dadurch gekennzeichnet, dass** das Zwischenglied (3) in Umformtechnik hergestellt ist.

11. Baugruppe nach einem der Ansprüche 1 bis 6, **dadurch gekennzeichnet, dass** das Zwischenglied (3) spanend hergestellt und monolithisch mit dem Befestigungsflansch (2) und/oder dem Innenring (4) verbunden ist.

12. Baugruppe nach einem der Ansprüche 1 bis 11, **dadurch gekennzeichnet, dass** mehrere aus einem Befestigungsflansch (2), einem Zwischenglied (3) und einem Innenring (4) bestehende Fassungen in einer Anschraubebene der Befestigungsflansche miteinander verbunden sind.

13. Baugruppe nach Anspruch 12, **dadurch gekennzeichnet, dass** jede einzelne Fassung nachjustierbar ist.

14. Baugruppe nach Anspruch 12 oder 13, **dadurch gekennzeichnet, dass** für die Verbindung der einzelnen Fassungen jeweils mehrere über den Umfang verteilt angeordnete Schrauben (10) in jedem Befestigungsflansch (2) vorgesehen sind, die auf dem gleichen Durchmesser liegen und die jeweils in Gewindebohrungen (8) der benachbarten Befestigungsflansche (2) eingeschraubt sind.

15. Baugruppe nach Anspruch 14, **dadurch gekennzeichnet, dass** die auf eine Fassung mit eingeschraubten Schrauben (10) folgende Fassung oder Fassungen mit Durchgangsbohrungen (9) im Befestigungsflansch (2) versehen sind, die mit den eingeschraubten Schrauben (10) fluchten und die Durchmesser aufweisen, die mindestens den größten Durchmessern der Schrauben (10) oder von Unterlegscheiben entsprechen.

## Claims

1. Module consisting of an optical element and a mounting, which has a fixing flange (2), a closed, one-part intermediate member (3) in at least approximately funnel form, and a closed inner ring (4), the optical element (1) being supported in the inner ring (4), which is joined to the fixing flange (2) via the intermediate member (3), the intermediate member (3) being joined on the side with the smaller diameter to the inner ring (4) and on the side with the greater diameter to the fixing flange (2), the inner ring (4) having at least three supporting surfaces in the form of supporting feet (6) which are distributed over the circumference, and on which the optical element (1) is supported, and the intermediate member (3) being in a form with thin walls compared with the fixing flange (2) and inner ring (4).

2. Module according to Claim 1, **characterized in that** the funnel angle of the intermediate member (3) is 30 to 40° to the optical axis.

3. Module according to one of Claims 1 or 2, **characterized in that** the intermediate member (3) has a funnel form with different angles of slope.

4. Module according to Claim 3, **characterized in that** the funnel angle to the optical axis on the side facing the fixing flange (2) is steeper than on the side facing the inner ring (4).

5. Module according to one of Claims 1 to 4, **characterized in that** the intermediate member (3) has notches.

6. Module according to one of Claims 1 to 5, **characterized in that** the intermediate member (3) is connected to the fixing flange (2) via a shoulder ring (5).

7. Module according to one of Claims 1 to 6, **characterized in that** the intermediate member (3) is produced galvanoplastically by moulding on a core (11).

8. Module according to Claim 7, **characterized in that** the intermediate member (3) can be joined to the fixing flange (2) and/or the inner ring (4) during galvanoplastic production.

9. Module according to Claim 6, **characterized in that** the shoulder ring (5) is wedge-shaped.

10. Module according to one of Claims 1 to 6, **characterized in that** the intermediate member (3) is produced by forming.

11. Module according to one of Claims 1 to 6, **characterized in that** the intermediate member (3) is produced by machining and is joined monolithically to the fixing flange (2) and/or the inner ring (4).

12. Module according to one of Claims 1 to 11, **characterized in that** multiple mountings consisting of a fixing flange (2), an intermediate member (3) and an inner ring (4) are joined to each other in a screwing plane of the fixing flanges.

13. Module according to Claim 12, **characterized in that** each individual mounting can be readjusted.

14. Module according to Claim 12 or 13, **characterized in that** to join the individual mountings, in each case multiple screws (10) which are distributed over the circumference, and which lie on the same diameter and are each screwed into threaded bores (8) of the adjacent fixing flanges (2), are provided in each fixing flange (2).

15. Module according to Claim 14, **characterized in that** the mounting(s) which follow a mounting with screwed-in screws (10) has/have, in the fixing flange (2), through bores (9), which are flush with the screwed-in screws (10) and have diameters corresponding to at least the greatest diameters of the screws (10) or washers.

## Revendications

1. Sous-ensemble constitué d'un élément optique et d'une monture, qui comprend une bride de fixation (2), un élément intermédiaire fermé (3), constitué d'une seule pièce, présentant au moins approximativement une forme conique, et une bague interne fermée (4), dans lequel l'élément optique (1) est logé dans la bague interne (4) reliée par l'élément intermédiaire (3) à la bride de fixation (2), dans lequel l'élément intermédiaire (3) est relié du côté présentant le diamètre le plus petit à la bague interne (4) et du côté présentant le diamètre le plus grand à la bride de fixation (2), dans lequel la bague interne (4) est pourvue d'au moins trois surfaces d'appui réparties sur la circonférence et présentant la forme de pieds d'appui (6) sur lesquels l'élément optique (1) est logé, et dans lequel l'élément intermédiaire (3) comporte des parois minces par rapport à la bride de fixation (2) et à la bague interne (4).

2. Sous-ensemble selon la revendication 1, **caractérisé en ce que** l'angle de conicité de l'élément intermédiaire (3) est de 30 à 40° par rapport à l'axe optique.

3. Sous-ensemble selon l'une des revendications 1 ou 2, **caractérisé en ce que** l'élément intermédiaire (3) présente une forme conique avec différents angles de conicité.

4. Sous-ensemble selon la revendication 3, **caractérisé en ce que** l'angle de conicité du côté orienté vers la bride de fixation (2) est supérieur par rapport à l'axe optique à celui du côté orienté vers la bague interne (4).

5. Sous-ensemble selon l'une des revendications 1 à 4, **caractérisé en ce que** l'élément intermédiaire (3) est pourvu d'encoches.

6. Sous-ensemble selon l'une des revendications 1 à 5, **caractérisé en ce que** l'élément intermédiaire (3) est relié à la bride de fixation (2) par l'intermédiaire d'une bague de réduction (5).

7. Sous-ensemble selon l'une des revendications 1 à 6, **caractérisé en ce que** l'élément intermédiaire (3) est fabriqué de manière galvanoplastique par déformation sur un noyau (11).

8. Sous-ensemble selon la revendication 7, **caractérisé en ce que** l'élément intermédiaire (3) peut être relié, lors de la fabrication par galvanoplastie, à la bride de fixation (2) et/ou à la bague interne (4).

9. Sous-ensemble selon la revendication 6, **caractérisé en ce que** la bague de réduction (5) présente une forme cunéiforme.

10. Sous-ensemble selon l'une des revendications 1 à 6, **caractérisé en ce que** l'élément intermédiaire (3) est fabriqué à l'aide d'une technique de déformation.

11. Sous-ensemble selon l'une des revendications 1 à 6, **caractérisé en ce que** l'élément intermédiaire (3) est fabriqué par enlèvement de copeaux et relié de manière monolithique à la bride de fixation (2) et/ou à la bague interné (4).

12. Sous-ensemble selon l'une des revendications 1 à 11, **caractérisé en ce que** plusieurs montures constituées d'une bride de fixation (2), d'un élément intermédiaire (3) et d'une bague interne (4) sont assemblées dans le plan de vissage des brides de fixation.

13. Sous-ensemble selon la revendication 12, **caractérisé en ce que** chacune des montures peut être ajustée.

14. Sous-ensemble selon la revendication 12 ou 13, **caractérisé en ce que**, pour le raccordement des différentes montures, plusieurs vis (10) réparties sur la circonférence sont prévues sur chaque bride de fixation (2), qui présentent le même diamètre et qui sont vissées dans des alésages filetés (8) de la bride de fixation (2) voisine.

15. Sous-ensemble selon la revendication 14, **caractérisé en ce que** ou les montures suivant une monture pourvue de vis (10) comportent des alésages traversants (9) dans la bride de fixation (2), alignés avec les vis (10) et présentant des diamètres correspondant au moins au diamètre le plus grand des vis (10) ou des rondelles d'appui.
